# EUROPÄISCHE PATENTSCHRIFT

(11) **EP 3 837 065 B1**
(45) Veröffentlichungstag und Bekanntmachung des Hinweises auf die Patenterteilung: **29.12.2021**
(21) Anmeldenummer: 19780197.0
(22) Anmeldetag: 26.09.2019
(51) Int. Cl.: B21K 1/46, F16B 35/06, F16B 31/00, F16B 31/02

(54) **ZWEITEILIGE HOCHFESTE SCHRAUBE**
TWO-PART HIGH-STRENGTH SCREW
VIS À RÉSISTANCE ÉLEVÉE EN DEUX PARTIES

(30) Priorität: 26.09.2018 DE 102018123690
(43) Veröffentlichungstag der Anmeldung: 23.06.2021
(73) Patentinhaber: KAMAX Holding GmbH & Co. KG, 35315 Homberg (Ohm) (DE)
(72) Erfinder: KELLNER, Manuel, 36304 Alsfeld-Altenburg (DE); SCHMITT, Thorsten, 35321 Laubach (DE); WALLMEIER, Stefan, 63773 Goldbach (DE)
(74) Vertreter: Müller Schupfner & Partner Patent- und Rechtsanwaltspartnerschaft mbB
(86) Internationale Anmeldenummer: PCT/EP2019/075992
(87) Internationale Veröffentlichungsnummer: WO 2020/064910

(56) Entgegenhaltungen:
- WO-A1-2012/053250
- DE-C- 156 467
- US-A- 3 828 382
- US-A- 3 978 758
- US-A- 4 321 001
- US-A1- 2006 024 142

## Beschreibung

### TECHNISCHES GEBIET DER ERFINDUNG

Die Erfindung betrifft eine hochfeste Schraube mit einem Kopf mit einer Werkzeugangriff-Kontur und einem Schaft mit einem vom Kopf wegweisenden freien Ende. An dem Schaft ist ein Gewindeabschnitt mit einem Gewinde angeordnet, wobei das Gewinde als metrisches ISO-Gewinde oder Zollgewinde ausgebildet ist.

Derartige Schrauben mit einem metrischen ISO-Gewinde oder Zollgewinde dienen zum Herstellen von Schraubverbindungen mit einem korrespondierenden Innengewinde einer Mutter oder eines Bauteils mit einer Gewindebohrung und sind von Holzschrauben und anderen selbstschneidende Universalschrauben zu unterscheiden. Aufgrund ihrer hohen Festigkeit werden sie insbesondere in spezialisierten technischen Gebieten angewendet, die solche Festigkeiten erfordern - z. B. die Kraftfahrzeugindustrie, Luftfahrtindustrie und der Maschinenbau - und die vom Handwerkerbereich, Heimwerkerbereich und Hobbybereich zu trennen sind.

### Stand der Technik

Eine hochfeste Schraube mit einem Kopf mit einer Werkzeugangriff-Kontur und einem Schaft mit einem vom Kopf wegweisenden freien Ende ist aus der Europäischen Patentanmeldung EP 3 358 021 A1 bekannt. An dem Schaft ist ein Gewindeabschnitt mit einem Gewinde angeordnet, das als metrisches ISO-Gewinde ausgebildet ist.

Eine aus mehreren separaten Teilen zusammengesetzte Schraube ist aus der chinesischen Patentanmeldung CN 103 438 O76 A bekannt. Ein erstes dieser Teile ist der Kopf der Schraube. Dieser weist ein radial innen angeordnetes Koppelelement aus, dass aus seiner Kopfauflagefläche herausragt. Das Koppelelement weist eine im Querschnitt gesehen etwa sternförmige Gestalt auf. Ein zweites dieser Teile ist ein Schaftabschnitt. Dieser weist an seiner dem Kopf zugewandten freien Stirnfläche eine zu dem Koppelelement korrespondierend ausgebildete Koppelausnehmung auf. Die Koppelausnehmung ist ebenfalls radial innen angeordnet. Für die Verbindung des Kopfs mit dem Schaftabschnitt wird das Koppelelement in die Koppelausnehmung eingeführt. Ein drittes dieser Teile ist weiterer Schaftabschnitt. In dieser Weise werden Schrauben unterschiedlicher Länge aus dem Kopf und einer unterschiedlichen Anzahl von Schaftabschnitten zusammengesetzt.

Eine ähnlich aufgebaute aus mehreren separaten Teilen zusammengesetzte Schraube ist aus der chinesischen Patentanmeldung CN 103 438 072 A bekannt. In diesem Fall ist die Koppelausnehmung als Bohrung mit einem Innengewinde und das Koppelelement als Gewindeabschnitt mit einem Außengewinde ausgebildet, das in einem Bereich des Schafts mit einem reduzierten Außendurchmesser angeordnet ist.

Die DE 156 467 C betrifft eine Kopfschraube, welche aus Stabeisen hergestellt wird. Dieses Stabeisen ist nur um weniges stärker, als der Bolzen der Schraube selbst.

Die US 3 978 758 A betrifft einen Hilfskopf mit peripheralen Angriffsflächen.

Die US 2006/0024142 A1 betrifft eine Drehmomentlimitierungsstruktur mit einer Schraube, welche eine rampenförmige Struktur mit einem freien Ende aufweist.

### Aufgabe der Erfindung und Lösung

Der Erfindung liegt die Aufgabe zugrunde, eine hochfeste Schraube bereitzustellen, die sich flexibel und wirtschaftlich herstellen lässt.

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### Beschreibung der Erfindung

Die Erfindung betrifft eine hochfeste Schraube mit einem Kopf mit einer Werkzeugangriff-Kontur und einem Schaft mit einem vom Kopf wegweisenden freien Ende. An dem Schaft ist ein Gewindeabschnitt mit einem Gewinde angeordnet, wobei das Gewinde als metrisches ISO-Gewinde oder Zollgewinde ausgebildet ist. Der Kopf und der Schaft sind als stofflich getrennte Teile ausgebildet. Der Kopf weist eine radial innen angeordnete Koppelausnehmung mit einem Axialkraftübertragungselement und einem Drehmomentübertragungselement auf. Der Schaft weist ein radial außen an seinem Außenumfang angeordnetes Koppelelement mit einem Axialkraftübertragungsgegenelement und einem Drehmomentübertragungsgegenelement auf. In anderen Worten kann das Koppelelement einen Teil des Schafts ausbilden, welcher diesen radial nach außen begrenzt. Das Koppelelement greift in die Koppelausnehmung ein. In anderen Worten kann das Koppelelement der Teil des Schafts sein, welcher sich in der Koppelausnehmung befindet. Maßgeblich ist dabei der Zustand, in welchem der Kopf seine endgültige bzw. bestimmungsgemäße Position in Relation zum Schaft eingenommen hat, insbesondere der montierte Zustand. Das Axialkraftübertragungselement und das Axialkraftübertragungsgegenelement sind derart formschlüssig ineinandergreifend ausgebildet und angeordnet, dass eine axiale translatorische Bewegung des Kopfs relativ zum Schaft in Richtung weg von dem freien Ende des Schafts verhindert wird. Das Drehmomentübertrgungselement und das Drehmomentübertragungsgegenelement sind derart ineinandergreifend ausgebildet und angeordnet, dass eine rotatorische Bewegung des Kopfs relativ zum Schaft im Anzugsdrehrichtungssinn des Gewindes reibschlüssig verhindert wird.

Die Erfindung betrifft weiterhin ein Umformverfahren zum maschinellen Herstellen einer hochfesten Schraube, insbesondere der oberhalb und/oder unterhalb beschriebenen Schraube, aus einem Kopfrohling und einem Schaftrohling, mit den folgenden Schritten:
- Umformen des Kopfrohlings derart in einem Umformwerkzeug, dass ein Kopf einer Schraube mit einer radial innen angeordneten Koppelausnehmung mit einem Axialkraftübertragungselement und einem Drehmomentübertragungselement erzeugt wird,
- Auffädeln des Kopfs mittels der Koppelausnehmung auf einen Schaftrohling,
- Umformen eines Teils des Schaftrohlings derart in einem Umformwerkzeug, dass ein Schaft mit einem radial außen an seinem Außenumfang angeordneten Koppelelement mit einem Axialkraftübertragungsgegenelement und einem Drehmomentübertragungsgegenelement erzeugt wird, und
- Zusammenfügen von Kopf und Schaft durch translatorisches Verschieben des Kopfs derart, dass das Koppelelement in die Koppelausnehmung eingreift.

Diese Verfahrensschritte werden in der angegebenen Reihenfolge durchgeführt. Der Schritt des Auffädelns des Kopfs auf den Schaftrohling kann aber auch erst nach dem Schritt des Umformens des Schaftrohlings zum Erzeugen des Koppelelements erfolgen. Es ist weiterhin möglich, dass zwischen den Verfahrensschritten weitere Schritte durchgeführt werden.

### Definitionen

**Hochfeste Schraube:** Unter einer hochfesten Schraube wird in dieser Anmeldung eine Schraube mit einer Zugfestigkeit Rₘ (bzw. Rm) von mindestens 800 N/mm2 verstanden. Typische hochfeste Schrauben gehören den Festigkeitsklassen 8.8, 10.9 oder 12.9 an. Es kann sich bei der erfindungsgemäßen hochfesten Schraube aber auch um eine ultrahochfeste Schraube mit einer Zugfestigkeit Rₘ von mindestens 1.400 N/mm2 handeln. Die erfindungsmäße "hochfeste" Schraube ist also mindestens eine hochfeste Schraube, kann aber auch eine ultrahochfeste Schraube sein.

**Werkzeugangriff-Kontur:** Unter einer Werkzeugangriff-Kontur des Kopfs ist eine an dem Kopf der Schraube liegende Kontur zu verstehen, an der ein Betätigungswerkzeug zum Betätigen der Schraube angreift. Die Kontur wird durch mehrere Funktionsflächen gebildet, die meist über Ecken oder Radien aneinander anschließen. Im Fachgebiet der Erfindung wird eine Werkzeugangriff-Kontur oftmals als "Kraftangriff" bezeichnet.

**Werkzeugangriff-Außenkontur:** Unter einer Werkzeugangriff-Außenkontur ist eine radial außen an dem Kopf der Schraube liegende Kontur zu verstehen, an der ein Betätigungswerkzeug zum Betätigen der Schraube angreift. Die Kontur wird durch mehrere Funktionsflächen gebildet, die meist über Ecken oder Radien aneinander anschließen. Im Fachgebiet der Erfindung wird eine Werkzeugangriff-Außenkontur oftmals als "Außenkraftangriff" bezeichnet.

**Werkzeugangriff-Innenkontur:** Unter einer Werkzeugangriff-Innenkontur ist eine radial innen an dem Kopf der Schraube liegende Kontur zu verstehen, in die ein Betätigungswerkzeug zum Betätigen der Schraube eingreift. Die Kontur wird durch mehrere Funktionsflächen gebildet, die meist über Ecken oder Radien aneinander anschließen. Die Werkzeugangriff-Innenkontur begrenzt eine zentrale Vertiefung in dem Kopf der Schraube in radialer Richtung. Im Fachgebiet der Erfindung wird eine Werkzeugangriff-Innenkontur oftmals als "Innenkraftangriff" bezeichnet.

**Mehrkant:** Unter einem Mehrkant wird in dieser Anmeldung eine Ausbildung einer Werkzeugangriff-Außenkontur des Kopfs der Schraube und eines Drehmomentübertragungsgegenelements des Schafts der Schraube ("Außenmehrkant") oder einer Werkzeugangriff-Innenkontur des Kopfs der Schraube und eines Drehmomentübertragungselements des Kopfs der Schraube ("Innenmehrkant") verstanden, bei der die etwa geradlinigen Funktionsflächen der Untereinheiten des Mehrkants innerhalb der Untereinheit über eine Ecke unter einem Winkel von 120° aneinander anschließen.

**Mehrzahn:** Unter einem Mehrzahn wird in dieser Anmeldung eine Ausbildung einer Werkzeugangriff-Außenkontur des Kopfs der Schraube und eines Drehmomentübertragungsgegenelements des Schafts der Schraube ("Außenmehrzahn") oder einer Werkzeugangriff-Innenkontur des Kopfs der Schraube und eines Drehmomentübertragungselements des Kopfs der Schraube ("Innenmehrzahn") verstanden, bei der die etwa geradlinigen Funktionsflächen der Untereinheiten des Mehrzahns innerhalb der Untereinheit über eine Ecke unter einem Winkel von 90° aneinander anschließen.

**Mehrrund:** Unter einem Mehrrund wird in dieser Anmeldung eine Ausbildung einer Werkzeugangriff-Außenkontur des Kopfs der Schraube und eines Drehmomentübertragungsgegenelements des Schafts der Schraube ("Außenmehrrund") oder einer Werkzeugangriff-Innenkontur des Kopfs der Schraube und eines Drehmomentübertragungselements des Kopfs der Schraube ("Innenmehrrund") verstanden, bei der die verrundeten Funktionsflächen über runde Ecken aneinander anschließen.

**Stern:** Unter einem Stern wird in dieser Anmeldung eine Ausbildung eines Drehmomentübertragungsgegenelements des Schafts der Schraube oder eines Drehmomentübertragungselements des Kopfs der Schraube verstanden, bei der die etwa geradlinigen Funktionsflächen der Untereinheiten des Sterns innerhalb der Untereinheit über eine Ecke unter einem Winkel von 60° aneinander anschließen.

**Geometrietyp:** Unter einem Geometrietyp wird in dieser Anmeldung die zugrundeliegende geometrische Form der Werkzeugangriff-Kontur, des Drehmomentübertragungselements und des Drehmomentübertragungsgegenelements verstanden. Typische Geometrietypen sind Mehrkant, Mehrzahn und Mehrrund. Dabei wird nicht zwischen der Außenkontur und der Innenkontur unterschieden. Dies bedeutet z. B., dass ein Außenmehrkant und ein Innenmehrkant demselben ersten Geometrietyp, ein Außenmehrzahn und ein Innenmehrzahn demselben zweiten Geometrietyp und ein Außenmehrrund und ein Innenmehrrund demselben dritten Geometrietyp angehören.

**Stofflich getrennte Teile:** Der Kopf und der Schaft der Schraube sind als stofflich getrennte Teile ausgebildet. Dies wird in dieser Anmeldung so verstanden, dass sie als nicht-zusammenhängende, nicht-einstückige, separate Teile hergestellt wurden. In der fertigen Stellung der Schraube sind der Kopf und der Schaft aber miteinander verbunden. Diese Verbindung wurde also erst nach ihrer separaten Herstellung realisiert.

### Weitere Beschreibung

Die neue hochfeste Schraube mit einem metrischen ISO-Gewinde oder Zollgewinde ist als mindestens zweiteilige Schraube mit einem Kopf und einem Schaft ausgebildet, die in bestimmter Weise miteinander verbunden werden. Die Verbindung erfolgt nicht über ein Gewinde oder eine andere beliebig lösbare Verbindungsart. Stattdessen erfolgt die Verbindung derart, dass der Kopf und der Schaft im Wesentlichen nur zerstörend voneinander trennbar sind. Die Schraube kann auch weitere Teile aufweisen.

Bei der neuen Verbindungsart zwischen dem Kopf und dem Schaft der Schraube sind u. a. die folgenden zwei technischen Aspekte beim Anziehen einer Schraubverbindung zu beachten:
Damit die Schraubverbindung die gewünschte Sicherungswirkung erzielt, muss über den Kopf der Schraube - genauer gesagt über die Kopfauflagefläche des Kopfs der Schraube - eine hinreichend große axiale Vorspannkraft aufgebracht werden ("Axialkraftübertragung"). Für die Erreichung dieser Vorspannkraft müssen der Kopf und der Schaft im Anzugsdrehrichtungssinn des Gewindes gemeinsam verschraubt werden. Das dafür erforderliche Drehmoment wird mittels eines Betätigungswerkzeugs über die Werkzeugangriff-Kontur des Kopfs aufgebracht und auf den Schaft übertragen ("Drehmomentübertragung"). Da der Kopf und der Schaft aber stofflich getrennt ausgebildet sind, muss für diese Drehmomentübertragung eine Bewegung des Kopfs relativ zum Schaft in der Richtung weg von dem freien Ende des Schafts verhindert werden.

Die neue zweiteilige hochfeste Schraube weist für die Realisierung dieser beiden Funktionen der Axialkraftübertragung und der Drehmomentübertragung eine Koppelausnehmung an dem Kopf und ein korrespondierendes Koppelelement an dem Schaft auf. Die Koppelausnehmung weist wiederum ein Axialkraftübertragungselement und ein Drehmomentübertragungselement auf. Das Koppelelement des Schafts weist ein korrespondierendes Axialkraftübertragungsgegenelement und ein Drehmomentübertragungsgegenelement auf. Das Axialkraftübertragungselement und das Axialkraftübertragungsgegenelement wirken so zusammen, dass die erforderliche Vorspannkraft erreicht werden kann. Es wird also eine Bewegung des Kopfs der Schraube in der Richtung weg von dem freien Ende des Schafts verhindert, sobald das Axialkraftübertragungselement und das Axialkraftübertragungsgegenelement ineinander eingreifen. Das Drehmomentübertragungselement und das Drehmomentübertragungsgegenelement wirken so zusammen, dass das gewünschte Drehmoment vom Kopf auf den Schaft übertragen und die Schraube somit betätigt werden kann. Dies gilt mindestens im Anzugsdrehrichtungssinn des Gewindes.

Die Schrauben können vergleichsweise dünn und lang sein. Derartige Schrauben mit einem großen Verhältnis von Länge zu Dicke (L/D) können im Stand der Technik nur mit einer relativ geringen Taktzahl hergestellt werden. Diese geringe Taktzahl ergibt sich daraus, dass die in einer Mehrstufenpresse herzustellende Schraube in jeder Stufe der Mehrstufenpresse über die gesamte Schaftlänge ausgestoßen und eingestoßen werden muss. Des Weiteren ergeben sich auch Qualitätsprobleme bei der Herstellung solcher Schrauben, da mit zunehmender Länge der Schraube die Knicksteifigkeit der Schraube und des Umformwerkzeugs abnimmt.

Mit der neuen geteilt ausgebildeten Schraube aus Kopf und Schaft lassen sich nun hochfeste Schrauben auch dann wirtschaftlich und hochqualitativ herstellen, wenn der Schaft der Schraube vergleichsweise dünn und lang ausgebildet ist. Die neue Ausbildung der Schraube ist aber ebenfalls auf andere Schraubengeometrien anwendbar.

Der Kopf der Schraube wird separat hergestellt, so dass kein negativer Einfluss der großen Schaftlänge bei der Herstellung des Kopfs vorliegt. Die Umformung des Schafts zur Erzeugung des Koppelelements wiederum ist in einem einstufigen Vorgang möglich, bei dem zudem weitaus weniger Material elastisch-plastisch verformt werden muss. Damit bestehen die Probleme der geringen Taktzahl und der für die durchzuführende Umformung zu geringen Knicksteifigkeit des Stands der Technik nicht. Die Schraubenlänge wird nicht durch den Bauraum der Presse begrenzt. Die Taktzahl ist unabhängig von der Schraubenlänge. Die hochfesten Schrauben können durch die Verwendung vorvergüteten Materials hergestellt werden. Dadurch entfällt ein nachträgliches Vergüten und Richten, wodurch die Herstellkosten zusätzlich reduziert werden. Die neue zweiteilige Schraube eignet sich für eine Standardisierung, wodurch Rüstzeiten verringert werden können.

Die Koppelausnehmung kann gestuft ausgebildet sein und einen ersten Bereich mit einem ersten Innendurchmesser und einen zweiten Bereich mit einem zweiten Innendurchmesser aufweisen. Zweckmäßigerweise ist der erste Bereich und/oder der zweite Bereich durch eine zylindrische oder durch eine konische Mantelfläche ausgebildet, welche rotationssymmetrisch ist, insbesondere um eine Erstreckungsrichtung des Schafts in einem montierten Zustand. Vorteilhafterweise ist zwischen dem ersten Bereich und dem zweiten Bereich ein Stufenbereich vorgesehen. Der erste Innendurchmesser ist größer als der zweite Innendurchmesser. Der zweite Bereich ist näher zum freien Ende des Schafts als der erste Bereich angeordnet. Hierdurch kann der zweite Bereich das Axialkraftübertragungselement im Sinne eines axialen Anschlags ausbilden oder benachbart zu diesem angeordnet sein. Vorteilhafterweise ist das Axialkraftübertragungselement zumindest teilweise, bevorzugt vollständig, durch den Stufenbereich ausgebildet. Über diesen axialen Anschlag hinaus ist eine Bewegung des Kopfs in Richtung auf das freie Ende des Schafts nicht möglich bzw. durch diesen Anschlag formschlüssig verhindert. Es kann aber sein, dass der Kopf in der anderen Richtung von dem Anschlag weg beweglich ist. Eine solche Bewegung kann aber auch verhindert werden, insbesondere durch eine Presspassung des ersten Bereichs und/oder des zweiten Bereichs, insbesondere mit Teilen des Schafts. Alternativ oder zusätzlich bevorzugt kann dies auch durch einen Hinterschnitt, ein Übermaß, ein Verstemmen oder eine andere elastisch-plastische Verformung erfolgen. Es ist aber auch möglich, dass keine derartige separate Sicherung realisiert wird, sondern diese Sicherung durch den Gewindeabschnitt übernommen wird.

Das Koppelelement umfasst vorteilhafterweise zumindest einen ersten Abschnitt und einen zweiten Abschnitt. Der erste Abschnitt und/oder der zweite Abschnitt weisen/weist vorteilhafterweise jeweils eine äußere Mantelfläche auf, welche das Koppelelement nach radial außen begrenzen bzw. begrenzt. Der erste Abschnitt und/oder der zweite Abschnitt ist vorteilhafterweise rotationssymmetrisch um die Erstreckungsrichtung des Schafts ausgebildet. In anderen Worten kann der erste Abschnitt beispielsweise konisch, zylindrisch oder tonnenförmig um die Erstreckungsrichtung des Schafts ausgebildet sein; hierdurch resultiert eine besonders einfache und kostengünstige Fertigung. Die Erstreckungsrichtung des Schafts ist insbesondere diejenige Richtung, in welche sich der Schaft erstreckt und/oder in welche sich die Länge des Schafts bemisst. Zweckmäßigerweise ist der Außendurchmesser des ersten Abschnitts größer als der Außendurchmesser des zweiten Abschnitts. Maßgeblich für diese Bemessung ist dabei insbesondere der mittlere Außendurchmesser des ersten bzw. des zweiten Abschnitts. Durch diese unterschiedlichen Außendurchmesser des ersten Abschnitts und des zweiten Abschnitts kann eine besonders bauraumsparende Möglichkeit der Schaffung des Axialkraftübertragungsgegenelements erreicht werden.

Vorteilhafterweise kontaktiert der erste Abschnitt den ersten Bereich der Koppelausnehmung und/oder der zweite Abschnitt kontaktiert den zweiten Bereich der Koppelausnehmung. Zweckmäßigerweise bildet dabei der erste Abschnitt mit dem ersten Bereich der Koppelausnehmung und/oder der zweite Abschnitt mit dem zweiten Bereich der Koppelausnehmung eine Presspassung aus. Durch die Presspassung kann eine reibschlüssige Drehmomentübertragung zwischen dem Schaft und dem Kopf zwischen dem ersten Abschnitt und dem ersten Bereich der Koppelausnehmung und/oder zwischen dem zweiten Abschnitt und dem zweiten Bereich der Koppelausnehmung erreicht werden. In anderen Worten kann das Drehmomentübertragungsgegenelement durch den ersten Abschnitt und/oder durch den zweiten Abschnitt des Koppelelements gebildet sein, wobei die Drehmomentübertragung, insbesondere ausschließlich, reibschlüssig durch die bzw. diese Presspassung(en) erfolgt. Diese Art der Drehmomentübertragung ist besonders kostengünstig, da keine Formschlussmittel im ersten Abschnitt und im ersten Bereich der Koppelausnehmung und/oder im zweiten Abschnitt und im zweiten Bereich der Koppelausnehmung geschaffen werden müssen. Alternativ bevorzugt kann auch ein Teil der Drehmomentübertragung durch Formschlussmittel und ein anderer Teil des Drehmoments durch einen Reibschluss erfolgen.

In einer vorteilhaften Ausführungsform ist die Presspassung zwischen dem ersten Abschnitt des Koppelelements und dem ersten Bereich der Koppelausnehmung derart beschaffen, dass die Pressspannung in Richtung zum freien Ende des Schafts hin zunimmt. In anderen Worten kann dies bedeuten, dass die durch die Presspassung verursachten Drücke auf die Oberfläche des ersten Abschnitts des Koppelelements und auf die Oberfläche des ersten Bereichs der Koppelausnehmung derart beschaffen sind, dass deren Größe in Richtung zum freien Ende des Schafts hin zunehmend sind. Hierdurch kann eine besonders starke Presspassung erreicht werden, welche auch hohe Drehmomente sicher übertragen kann.

In einer alternativ oder zusätzlich bevorzugten Ausführungsform ist die Presspassung zwischen dem zweiten Abschnitt des Koppelelements und dem zweiten Bereich der Koppelausnehmung derart beschaffen, dass die Pressspannung in Richtung zum freien Ende des Schafts hin abnimmt. In anderen Worten kann dies bedeuten, dass die durch die Presspassung verursachten Drücke auf die Oberfläche des zweiten Abschnitts des Koppelelements und auf die Oberfläche des zweiten Bereichs der Koppelausnehmung derart beschaffen sind, dass deren Größe in Richtung zum freien Ende des Schafts hin abnehmend sind. Hierdurch kann erreicht werden, dass keine Spannungsspitzen am Ende des kontaktierenden Teils des zweiten Abschnitts des Koppelelements in Richtung zum freien Ende des Schafts hin entstehen. Beispielsweise kann dies dadurch erreicht werden, dass der zweite Abschnitt des Koppelelements konisch ausgebildet ist, wobei der Durchmesser dieses Konuses in Richtung zum freien Ende des Schafts hin abnehmend ausgebildet ist. Hierdurch kann eine besonders starke Presspassung erreicht werden, welche auch hohe Drehmomente sicher übertragen kann.

Vorteilhafterweise liegt zwischen dem ersten Abschnitt und dem zweiten Abschnitt des Koppelements ein Zwischenabschnitt, wobei vorteilhafterweise der Zwischenabschnitt, insbesondere vollständig, das Axialkraftübertragungsgegenelement ausbildet. Hierdurch kann ein besonders kompakter Schaft erreicht werden. Vorteilhafterweise ist dieser Zwischenabschnitt teilweise konisch ausgebildet, denn hierdurch kann eine besonders einfache Fertigung erreicht werden.

Zweckmäßigerweise ist der erste Abschnitt des Schafts in Richtung zum freien Ende des Schafts durch einen ersten Übergangsbereich des Zwischenabschnitts begrenzt. In anderen Worten kann dies bedeuten, dass der Zwischenabschnitt nächstliegend zum ersten Abschnitt einen ersten Übergangsbereich aufweist. Beispielsweise ist dieser erste Übergangsbereich eine Fase oder eine Stufe. Vorteilhafterweise ist der erste Übergangsbereich jedoch durch eine Rundung gebildet, wobei diese Rundung einen ersten Rundungsradius aufweist. Das Verhältnis dieses ersten Rundungsradiuses zu dem Außendurchmesser des ersten Abschnitts liegt vorteilhafterweise in einem Bereich von 0,01 bis 0,4, besonders bevorzugt in einem Bereich von 0,02 bis 0,25 und besonders stark bevorzugt in einem Bereich von 0,04 bis 0,15. Bei einem Verhältnis von 0,01 bis 0,4 resultiert eine besonders einfache Fertigung des Zwischenabschnitts. Bei einem Verhältnis von 0,02 bis 0,25 hingegen kann eine besonders geringe Kerbwirkung erreicht werden, so dass die Festigkeit der Schraube erhöhte werden kann. Bei einem Verhältnis im Bereich von 0,04 bis 0,15 hat die Anmelderin überraschender Weise herausgefunden, dass ein besonders vorteilhaftes Verhältnis zwischen der Schwingungsfestigkeit der Schraube, insbesondere bei schwellender Belastung, und der statischen Festigkeit der Schraube resultiert.

Alternativ oder zusätzlich bevorzugt ist der zweite Abschnitt des Schafts entgegen der Richtung zum freien Ende des Schafts durch einen zweiten Übergangsbereich des Zwischenabschnitts begrenzt. In anderen Worten kann dies bedeuten, dass der Zwischenabschnitt nächstliegend zum zweiten Abschnitt einen zweiten Übergangsbereich aufweist. Beispielsweise ist dieser zweite Übergangsbereich eine Fase oder eine Stufe. Vorteilhafterweise ist der zweite Übergangsbereich jedoch durch eine Rundung gebildet, wobei diese Rundung einen zweiten Rundungsradius aufweist. Das Verhältnis dieses zweiten Rundungsradiuses zu dem Außendurchmesser des zweiten Abschnitts liegt vorteilhafterweise in einem Bereich von 0,01 bis 0,4, besonders bevorzugt in einem Bereich von 0,02 bis 0,25 und besonders stark bevorzugt in einem Bereich von 0,04 bis 0,15. Bei einem Verhältnis von 0,01 bis 0,4 resultiert eine besonders einfache Fertigung des Zwischenabschnitts. Bei einem Verhältnis von 0,02 bis 0,25 hingegen kann eine besonders geringe Kerbwirkung erreicht werden, so dass die Festigkeit der Schraube erhöhte werden kann. Bei einem Verhältnis im Bereich von 0,04 bis 0,15 hat die Anmelderin überraschender Weise herausgefunden, dass ein besonders vorteilhaftes Verhältnis zwischen der Schwingungsfestigkeit der Schraube, insbesondere bei schwellender Belastung, und der statischen Festigkeit der Schraube resultiert.

Besonders zweckmäßig ist es dabei, wenn das Verhältnis des zweiten Rundungsradius zum ersten Rundungsradius in einem Bereich von 0,8 bis 1,8 liegt, denn hierdurch kann erreicht werden, dass eine besonders einfache Fertigung dieser Rundungen erfolgen kann. Ein besonders optimales Kerbwirkungsverhältnis kann erreicht werden, wenn das Verhältnis des zweiten Rundungsradius zum ersten Rundungsradius in einem Bereich von 1,01 bis 1,6 liegt.

Das Koppelelement kann einen zu dem axialen Anschlag korrespondierenden axialen Gegenanschlag bilden, dessen Außendurchmesser größer als der Außendurchmesser des Schafts und größer als der zweite Innendurchmesser der Koppelausnehmung ist. Der Gegenanschlag kann vorteilhafterweise einen Konusabschnitt aufweisen. Durch das Paar aus Anschlag und Gegenanschlag wird die für die Aufbringung der Vorspannkraft zu verhindernde axiale translatorische Bewegung des Kopfs in Richtung des freien Endes des Schafts verhindert.

Der erste Bereich der Koppelausnehmung kann das Drehmomentübertragungselement bilden. Es ist aber auch möglich, dass der zweite Bereich das Drehmomentübertragungselement bildet. Es ist auch möglich, dass beide Bereiche das Drehmomentübertragungselement bilden. Diese beiden Bereiche müssen auch nicht direkt aneinander anschließen. Es können also auch andere Bereiche zwischengeordnet sein, die andere oder auch keine Funktionen erfüllen.

Das Drehmomentübertragungselement und das Drehmomentübertragungsgegenelement können in einer nicht erfindungsgemäßen Ausführungsform formschlüssig ineinandergreifend ausgebildet und angeordnet sein. Ein solcher Formschluss kann insbesondere so realisiert werden, dass das Drehmomentübertragungselement und das Drehmomentübertragungsgegenelement dem Geometrietyp Mehrkant, Mehrzahn, Mehrrund oder Stern angehören. Es sind aber auch andere geometrische Ausbildungen möglich, die den gewünschten Formschluss erbringen. Ein Beispiel ist ein Rändel. Es ist aber weiterhin möglich, dass eine andere Art der Momentenübertragung gewählt wird. Eine erfindungsgemäße Möglichkeit stellt dabei eine reibschlüssige Verbindung dar. Diese kann insbesondere im Sinne einer Übermaßpassung realisiert werden.

Das Drehmomentübertragungselement und das Drehmomentübertragungsgegenelement können derart ineinandergreifend ausgebildet und angeordnet sein, dass auch eine rotatorische Bewegung des Kopfs relativ zum Schaft im Lösedrehrichtungssinn des Gewindes verhindert wird. Dies stellt den Normalfall dar, bei dem die Schraube ohne Einschränkungen in beiden Drehrichtungssinnen gleich betätigt werden kann.

Das Drehmomentübertragungselement und das Drehmomentübertragungsgegenelement können jeweils in Umfangsrichtung symmetrisch ausgebildet sein. Diese Symmetrie ist so zu verstehen, dass das Drehmomentübertragungselement und Drehmomentgegenübertragungselement so ausgebildet sind, dass sie - abgesehen davon, dass in dem einen Drehrichtungssinn ein Lösen und in dem anderen ein Anziehen der Schraubverbindung erfolgt - unabhängig vom Drehrichtungssinn in der gleichen Weise wirken.

Das Drehmomentübertragungselement und das Drehmomentübertragungsgegenelement können in einer nicht erfindungsgemäßen Ausführungsform aber auch jeweils in Umfangsrichtung asymmetrisch ausgebildet sein. Hierdurch kann ein je nach Drehrichtungssinn unterschiedliches Zusammenwirken erreicht werden. Beispielsweise kann die Asymmetrie so ausgebildet sein, dass eine rotatorische Bewegung des Kopfs relativ zum Schaft im Löserichtungssinn des Gewindes nicht verhindert wird. Damit wird eine gesicherte Schraubverbindung erreicht, die nicht oder zumindest nicht ohne zusätzliche Maßnahmen durch unbefugte Dritte gelöst werden kann.

Das Drehmomentübertragungselement und das Drehmomentübertragungsgegenelement können derart ausgebildet sein, dass sie das maximale Anzugsdrehmoment der Schraube bestimmen und bei Überschreitung des maximalen Anzugsdrehmoments die rotatorische Bewegung des Kopfs relativ zum Schaft im Anzugsdrehrichtungssinn des Gewindes nicht mehr verhindern. In dieser Weise wird durch die Schraube selbst eine Drehmomentsicherung bereitgestellt. Diese verhindert das Anziehen einer Schraubverbindung über das maximale Anzugsdrehmoment hinaus.

Der Schaft der Schraube kann aus hochfestem Stahl oder einem Faserverbundwerkstoff (z. B. CFK) bestehen. Der Kopf der Schraube kann ebenfalls aus hochfestem Stahl oder einem Faserverbundwerkstoff (z. B. CFK) bestehen. Durch die zweiteilige Ausbildung der Schraube sind grundsätzlich viele verschiedene Materialpaarungen denkbar, solange die Festigkeitsanforderungen im Sinne einer hochfesten Schraube erfüllt werden. Die Materialwahl kann auch dadurch beeinflusst werden, dass dem Kopf und dem Schaft bestimmte elektrisch leitende oder isolierende Eigenschaften zugewiesen werden. Hierfür kann z. B. auch Metall, insbesondere Stahl, von einem isolierenden Kunststoffmantel umgeben sein. So kann z. B. der Kopf der Schraube elektrisch leitend und der Schaft der Schraube elektrisch nichtleitend ausgebildet sein. Die umgekehrte Konstellation ist ebenfalls möglich.

Das neue Verfahren dient zum Herstellen einer hochfesten Schraube, wie diese oberhalb beschrieben wurde. Bei allen oberhalb beschriebenen Verfahrensschritten kann die Schraube weiterhin eines oder mehrere der oberhalb beschriebenen Merkmale aufweisen.

Vor dem Schritt des Auffädelns des Kopfs mittels der Koppelausnehmung auf den Schaftrohling kann der Kopfrohling derart in einem Umformwerkzeug umgeformt werden, dass eine Werkzeugangriff-Kontur erzeugt wird. Bei der Werkzeugangriff-Kontur kann es sich um eine Werkzeugangriff-Außenkontur oder eine Werkzeugangriff-Innenkontur handeln. Diese kann dem Geometrietyp Mehrkant, Mehrzahn oder Mehrrund angehören.

Nach dem Schritt des Zusammenfügens von Kopf und Schaft kann zur Verhinderung einer axialen translatorischen Bewegung des Kopfs relativ zum Schaft in Richtung des freien Endes des Schafts der Kopf an dem Schaft gesichert werden. Diese Sicherung kann beispielsweise durch einen Hinterschnitt, ein Übermaß, ein Verstemmen oder eine andere elastisch-plastischeVerformung erfolgen. Es ist aber auch möglich, dass keine derartige separate Sicherung realisiert wird, sondern diese Sicherung durch den Gewindeabschnitt übernommen wird.

Bei dem Umformverfahren zum maschinellen spanlosen Herstellen der hochfesten Schraube handelt es sich insbesondere um ein Kaltumformverfahren. Das Verfahren wird mittels eines Umformwerkzeugs in einer Umformpresse, insbesondere einer Mehrstufenpresse, durchgeführt. Der Schaftrohling kann während des Umformens seines axialen Endbereichs durch Klemmbacken in der Umformpresse gehalten werden. Das Umformen des axialen Endbereichs desSchaftrohlings kann mittels eines translatorisch bewegten Stempels erfolgen.

Zum Erreichen der hohen Festigkeit der Schraube kann diese bei ihrer Herstellung einer Wärmebehandlung unterzogen werden. Bei der Wärmebehandlung kann es sich insbesondere um Bainitisieren (Zwischenstufenvergüten) zum Erzeugen eines Bainitgefüges handeln.

Bei der Umformung zum Herstellen des Gewindeabschnitts kann es sich insbesondere um Rollen oder Walzen handeln. Es kann sich insbesondere um eine Kaltumformung handeln.

Das für die Herstellung der hochfesten Schraube verwendete Ausgangsmaterial wird üblicherweise als "Draht" bezeichnet. Der für die neue hochfeste Schraube verwendete Draht kann aus kaltumformbarem unvergüteten Stahl bestehen und einen Kohlenstoffgehalt von etwa 0,2 % bis 0,6 % oder etwa 0,2 % bis 0,5 % besitzen. Der Stahl kann Legierungsanteile, insbesondere Cr,Mo, Mn, Ni, V, Nb oder Ti von insbesondere insgesamt mehr als etwa 1,1 % aufweisen.

Die neue hochfeste Schraube kann ein Bainitgefüge aufweisen, welches insbesondere zumindest teilweise durch Bainitisieren erzeugt wurde. Das Bainitgefüge führt zu einer sehr hohen Zugfestigkeit bei einer ebenfalls sehr hohen Duktilität. Diese hohe Duktilität oder Zähigkeit unterscheidet das Bainitgefüge wesentlich von einem Martensitgefüge, welches im Stand der Technik in bekannter Weise durch Härten mit anschließendem Anlassen erzeugt wird. Bei dem Zwischenstufenvergüten erfolgt die Härtung stattdessen durch ein schnelles Abkühlen aus der Austenitphase durch eine isothermisohe Gefügeumwandlung in der Bainitstufe. Dabei verweilt das Teil, insbesondere die Schraube, bei einer isothermen Temperatur im Salzbad, bis die Gefügeumwandlung vom Austenit zum Bainit über den gesamten Querschnitt abgeschlossen ist. Der bei der martensitischen Härtung erforderliche Anlassvorgang kann vorzugsweise entfallen. Damit wird auch die Neigung zum Härteverzug verringert.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der urprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Gewinde die Rede ist, ist dies so zu verstehen, dass genau ein Gewinde, zwei Gewinde oder mehr Gewinde vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben. Dabei fallen die in den Figuren 1-20 und 23-29 gezeigten Formschlussmittel zur Drehmomentenübertragung zwischen Kopf und Schaft nicht unter den Anspruchswortlaut.
- Fig.1: zeigt eine perspektivische Ansicht einer ersten beispielhaften Ausführungsform der neuen hochfesten Schraube.
- Fig.2: zeigt eine vergrößerte perspektivische Ansicht eines Teils der Schraube gemäß Fig. 1.
- Fig.3: zeigt eine teilweise weggeschnittene perspektivische Ansicht der Schraube gemäß Fig. 2.
- Fig.4: zeigt eine Schnittansicht eines Teils der Schraube gemäß Fig. 1.
- Fig.5: zeigt eine Schnittansicht einer zweiten beispielhaften Ausführungsform der Schraube.
- Fig.6: zeigt eine Schnittansicht einer dritten beispielhafte Ausführungsform der Schraube.
- Fig.7: zeigt eine perspektivische Ansicht einer weiteren Ausführungsform der Schraube.
- Fig.8: zeigt teilweise weggeschnittene perspektivische Ansicht der Schraube gemäß Fig. 7.
- Fig.9: zeigt eine perspektivische Ansicht eines Teils einer ersten Ausführungsform des Koppelelements des Schafts der Schraube.
- Fig.10: zeigt eine perspektivische Ansicht eines Teils einer zweiten Ausführungsform des Koppelelements des Schafts der Schraube.
- Fig.11: zeigt eine perspektivische Ansicht eines Teils einer dritten Ausführungsform des Koppelelements des Schafts der Schraube.
- Fig.12: zeigt eine perspektivische Ansicht eines Teils einer vierten Ausführungsform des Koppelelements des Schafts der Schraube.
- Fig.13: zeigt eine perspektivische Ansicht eines Teils einer fünften Ausführungsform des Koppelelements des Schafts der Schraube.
- Fig.14: zeigt eine perspektivische Ansicht eines Teils einer sechsten Ausführungsform des Koppelelements des Schafts der Schraube.
- Fig.15: zeigt eine Ansicht einer ersten beispielhaften Ausführungsform des Kopfs der Schraube mit einer Koppelausnehmung.
- Fig.16: zeigt eine Ansicht einer zweiten beispielhaften Ausführungsform des Kopfs der Schraube mit einer Koppelausnehmung.
- Fig.17: zeigt eine Ansicht einer dritten beispielhaften Ausführungsform des Kopfs der Schraube mit einer Koppelausnehmung.
- Fig.18: zeigt eine Ansicht einer vierten beispielhaften Ausführungsform des Kopfs der Schraube mit einer Koppelausnehmung.
- Fig.19: zeigt eine Ansicht einer fünften beispielhaften Ausführungsform des Kopfs der Schraube mit einer Koppelausnehmung.
- Fig.20: zeigt eine Ansicht einer sechsten beispielhaften Ausführungsform des Kopfs der Schraube mit einer Koppelausnehmung.
- Fig.21: zeigt eine teilweise weggeschnittene perspektivische Ansicht einer weiteren beispielhaften Ausführungsform der neuen Schraube.
- Fig.22: zeigt eine weitere Ansicht der Schraube gemäß Fig. 21.
- Fig.23: zeigt eine perspektivische Ansicht einer weiteren beispielhaften Ausführungsform der neuen Schraube.
- Fig.24: zeigt eine teilweise weggeschnittene perspektivische Ansicht der Schraube gemäß Fig. 23.
- Fig.25: zeigt eine perspektivische Ansicht einer weiteren beispielhaften Ausführungsform des Kopfs der Schraube mit einer Koppelausnehmung.
- Fig.26: zeigt eine seitliche Schnittansicht des Kopfs der Schraube gemäß Fig. 25.
- Fig.27: zeigt eine weitere Ansicht des Kopfs der Schraube gemäß Fig. 25.
- Fig.28: zeigt eine perspektivische Ansicht einer beispielhaften Ausführungsform des Schafts der Schraube, der zu dem Kopf gemäß Fig. 25-27 gehört.
- Fig.29: zeigt eine Seitenansicht des Schafts gemäß Fig. 28.
- Fig.30A: zeigt einen ersten Schritt einer beispielhaften Ausführungsform des neuen Verfahrens zum Herstellen der Schraube.
- Fig.30B: zeigt einen zweiten Schritt des neuen Verfahrens.
- Fig.30C: zeigt einen dritten Schritt des neuen Verfahrens.
- Fig.30D: zeigt einen vierten Schritt des neuen Verfahrens.
- Fig.30E: zeigt einen fünften Schritt des neuen Verfahrens.

### FIGURENBESCHREIBUNG

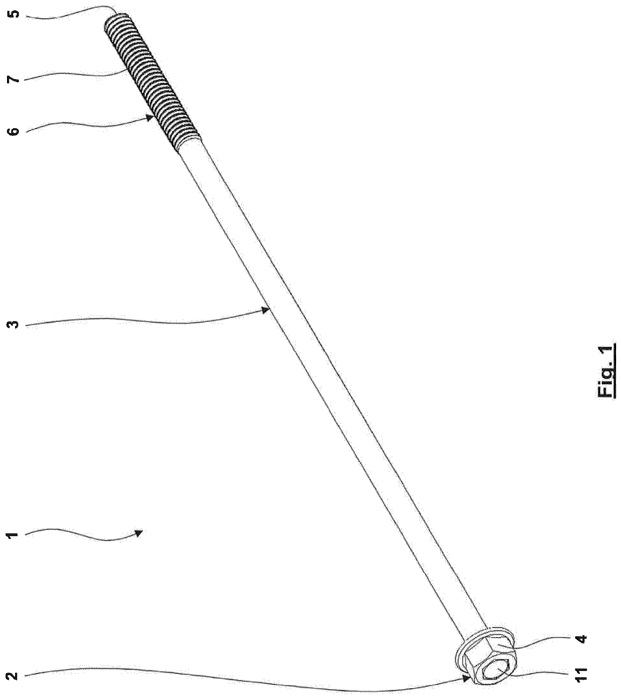

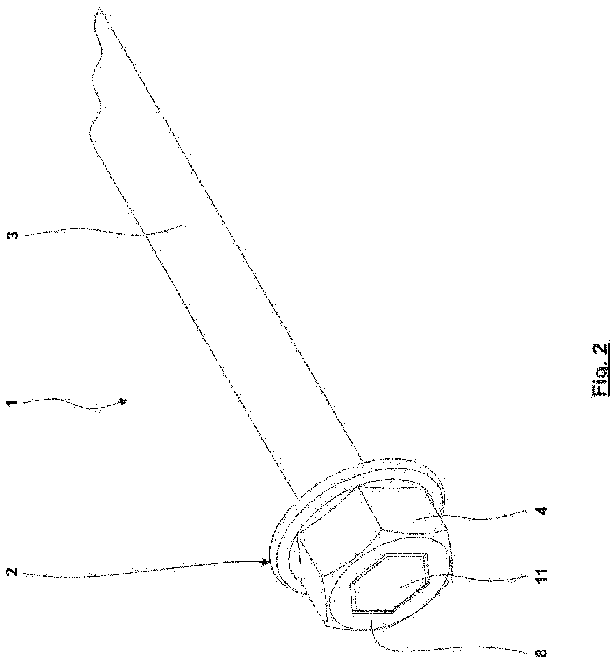

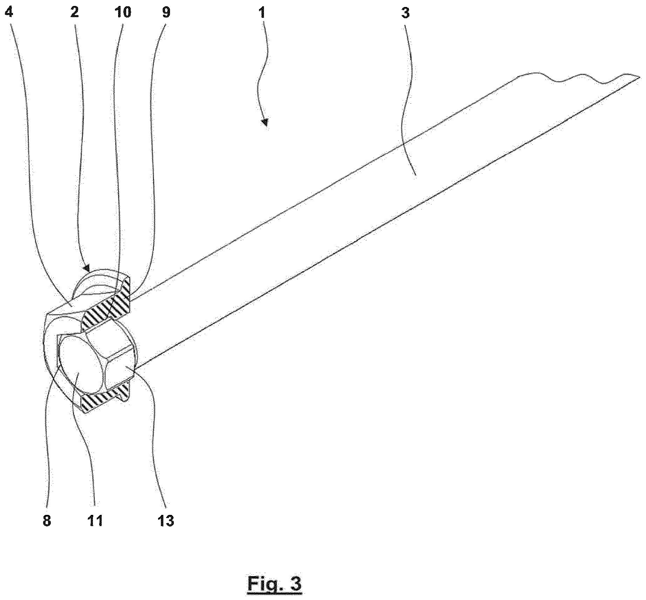

**Fig. 1-4** zeigen verschiedene Ansichten einer ersten beispielhaften Ausführungsform einer hochfesten Schraube 1. Bei der Schraube 1 handelt es sich um eine hochfeste Schraube 1 mit einer Zugfestigkeit von mindestens 800 N/mm², insbesondere eine ultrahochfeste Schraube 1 mit einer Zugfestigkeit von mindestens 1400 N/mm². Gleiches gilt für die weiteren Ausführungsformen der Schraube 1.

Die Schraube 1 weist einen Kopf 2 und einen Schaft 3 auf. Der Kopf 2 und der Schaft 3 sind als separate Bauteile ausgebildet, die zunächst stofflich getrennt hergestellt und erst anschließend miteinander verbunden wurden.

Der Kopf 2 weist eine Werkzeugangriff-Kontur 4 auf, die zum Betätigen des Kopfs im Sinne des Anziehens oder Lösens einer mit der Schraube 1 hergestellten Schraubverbindung dient. Im vorliegenden Fall handelt es sich um eine Werkzeugangriff-Außenkontur. Es könnte sich aber auch stattdessen um eine Werkzeugangriff-Innenkontur handeln. Auch Kombinationen beider Konturarten sind möglich. Im dargestellten Beispiel handelt es sich bei dem Geometrietyp der Werkzeugangriff-Kontur um einen Sechskant. Andere Geometrietypen sind aber ebenfalls möglich.

Der Schaft 3 weist ein vom Kopf 2 wegweisendes freies Ende 5 auf. An dem Schaft 3 ist ein Gewindeabschnitt 6 mit einem Gewinde 7 angeordnet. Im vorliegenden Fall ist es im Bereich des freien Endes 5 angeordnet. Es könnte aber auch an einer anderen Stelle des Schafts 3 alternativ oder zusätzlich angeordnet sein. Bei dem Gewinde 7 handelt es sich im dargestellten Beispiel um ein metrisches ISO-Gewinde. Es könnte sich aber auch um ein Zollgewinde handeln.

Der Kopf 2 und der Schaft 3 der Schraube 1 sind als stofflich getrennte Teile ausgebildet. Hierfür weist der Kopf 2 eine radial innen angeordnete Koppelausnehmung 8 mit einem Axialkraftübertragungselement 9 und einem Drehmomentübertragungselement 10 auf. Der Schaft 3 weist hierfür korrespondierend ein radial außen an seinem Außenumfang angeordnetes Koppelelement 11 mit einem Axialkraftübertragungsgegenelement 12 und einem Drehmomentübertragungsgegenelement 13 auf. Das Koppelelement 11 greift in die Koppelausnehmung 8 ein, um die Verbindung zwischen Kopf 2 und Schaft 3 herzustellen. Das Drehmomentübertragungsgegenelement 13 kann dabei Formschlussmittel, wie einen Mehrkant, Mehrzahn oder Mehrrund, aufweisen. Alternativ bevorzugt kann das Drehmomentübertragungsgegenelement auch dadurch gebildet sein, dass dieses mit dem Drehmomentübertragungselement eine Presspassung ausbildet, um die erfindungsgemäße reibschlüssige Drehmomentübertragung zu erreichen.

Das Axialkraftübertragungselement 9 und das Axialkraftübertragungsgegenelement 12 sind derart formschlüssig ineinandergreifend ausgebildet und angeordnet, dass eine axiale translatorische Bewegung des Kopfs 2 relativ zum Schaft 3 in der Richtung weg von dem freien Ende 5 des Schafts 3 verhindert wird. Das Drehmomentübertragungselement 10 und das Drehmomentübertragungsgegenelement 13 sind derart ineinandergreifend ausgebildet und angeordnet, dass eine rotatorische Bewegung des Kopfs 2 relativ zum Schaft 3 im Anzugsdrehrichtungssinn des Gewindes 7 verhindert wird. Im vorliegenden Fall erfolgt dieses Ineinandergreifen formschlüssig. Andere Drehmomentübertragungsarten - z. B. ein Kraftschluss bzw. ein Reibschluss - sind aber ebenfalls möglich.

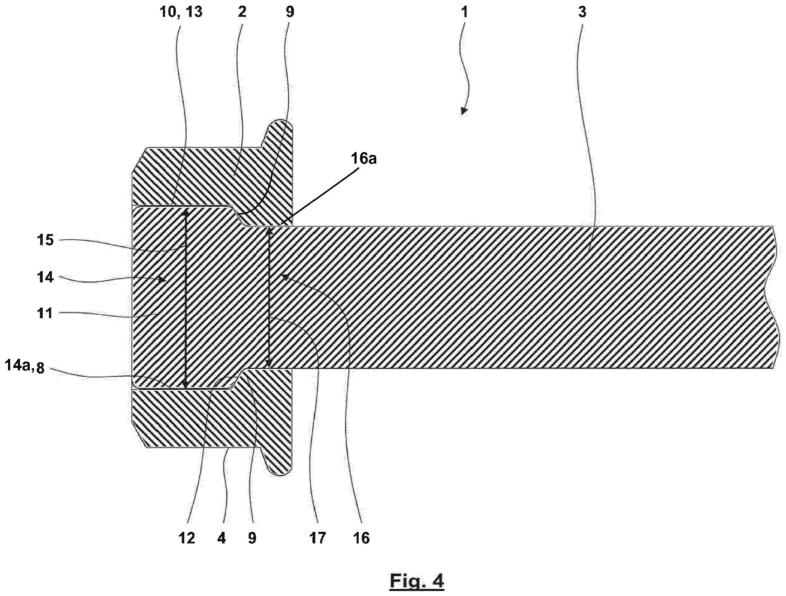

Die Koppelausnehmung 8 ist gestuft ausgebildet und weist einen ersten Bereich 14 mit einem ersten Innendurchmesser 15 und einen zweiten Bereich 16 mit einem zweiten Innendurchmesser 17 auf. Der erste Innendurchmesser 15 ist größer als der zweite Innendurchmesser 17, wobei der zweite Bereich 16 näher zum freien Ende 5 des Schafts 3 als der erste Bereich 14 angeordnet ist. In dieser Weise kann der zweite Bereich 16 das Axialübertragungselement 9 im Sinne eines axialen Anschlags ausbilden. In der in Fig.4 dargestellten Situation ist das Axial-übertagungselement 9 jedoch durch Stufenbereich ausgebildet, welcher mit dem Axialkraftübertragungsgegenelement 12 kontaktiert, wobei das Axialkraftübertragungsgegenelement 12 durch einen Zwischenabschnitt gebildet ist, welcher sich zwischen dem ersten Abschnitt 14a und dem zweiten Abschnitt 16a des Koppelelements befindet. Der ersten Bereich 14 kontaktiert dabei den ersten Abschnitt 14a des Koppelelements 11 und der zweite Bereich 16 den zweiten Abschnitt 16a des Koppelelements 11.

Das Koppelelemente 11 bildet einen zu dem Anschlag korrespondierenden axialen Gegenanschlag, dessen Außendurchmesser größer als der Außendurchmesser des Schafts 3 und größer als der zweite Innendurchmesser 17 der Koppelausnehmung 8 ist.

Der erste Bereich 14 bildet das Drehmomentübertragungselement 10. Das Drehmomentübertragungselement 10 könnte aber auch zusätzlich oder alternativ durch den zweiten Bereich 17 oder ein anderes Teil gebildet werden.

Im vorliegenden Fall gehören das Drehmomentübertragungselement 10 und das Drehmomentübertragungsgegenelement 13 dem Geometrietyp Mehrkant und insbesondere Sechskant an. Andere Geometrietypen sind aber ebenfalls möglich.

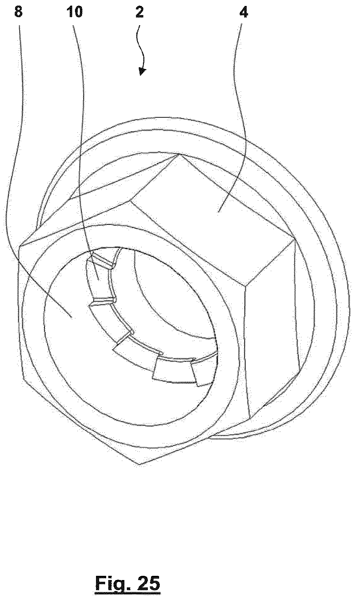

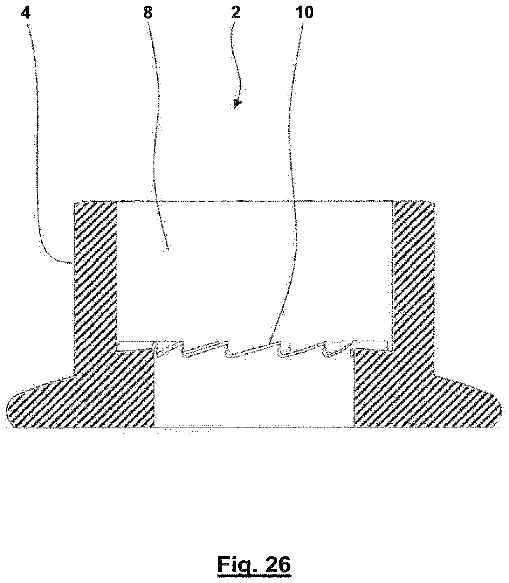

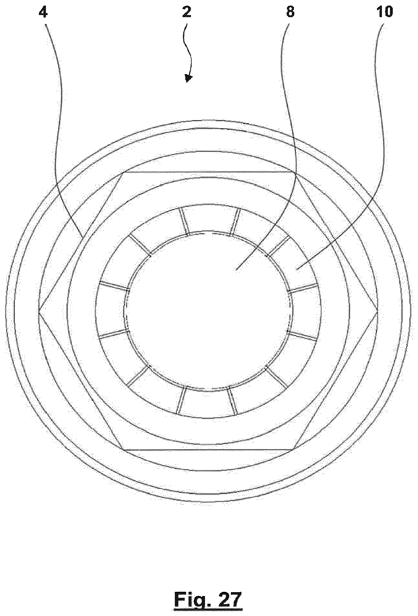

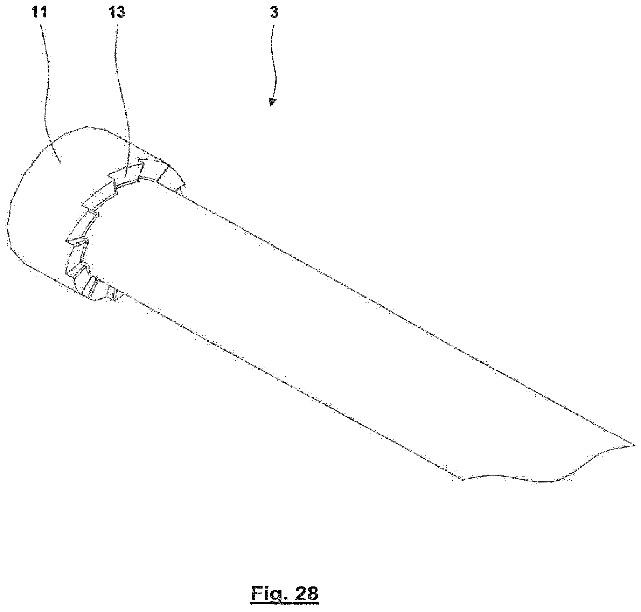

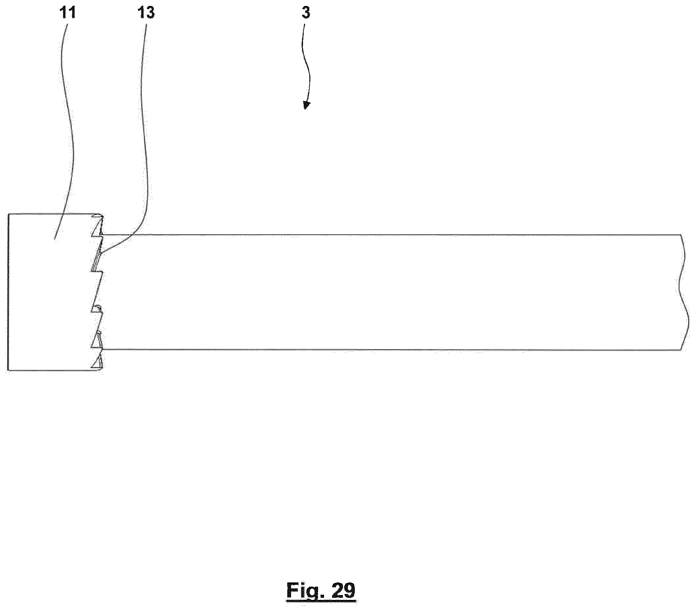

Das Drehmomentübertragungselement 10 und das Drehmomentübertragungsgegenelement 13 sind derart ineinandergreifend ausgebildet und angeordnet, dass auch eine rotatorische Bewegung des Kopfs 2 relativ zum Schaft 3 im Löserichtungssinn des Gewindes 7 verhindert wird. Im vorliegenden Fall sind das Drehmomentübertragungselement 10 und das Drehmomentübertragungsgegenelement 13 jeweils in Umfangsrichtung symmetrisch ausgebildet. Hierdurch findet die Momentenübertragung unabhängig vom Drehrichtungssinn in der gleichen Weise statt. Es ist aber auch möglich, dass das Drehmomentübertragungselement 10 und das Drehmomentübertragungsgegenelement 13 jeweils in Umfangsrichtung asymmetrisch ausgebildet sind. Dies wird anhand von Fig. 25-29 unterhalb näher erläutert.

In den folgenden Ausführungen zu den weiteren Ausführungsformen der neuen Schraube 1 wird zwecks Vermeidung unnötiger Wiederholungen nicht alles erneut angegeben, was in Bezug auf die erste beispielhafte Ausführungsform der Schraube 1 gemäß Fig. 1-4 erläutert wurde. Es wird auf diese Ausführungen vollumfänglich verwiesen, sofern nicht auf den jeweiligen Unterschied zwischen den Ausführungsformen abgestellt wird.

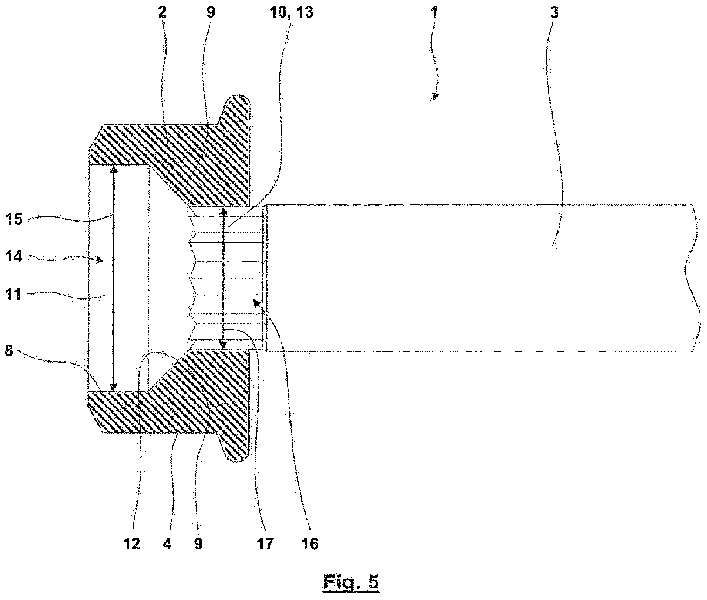

In **Fig. 5** ist eine Fig. 4 entsprechende Ansicht einer zweiten beispielhaften Ausführungsform der Schraube 1 dargestellt. Die Koppelausnehmung 8 und das Koppelelement 11 sind hier anders ausgebildet. Das Drehmomentübertragungselement 10 ist nicht in dem ersten Bereich 14, sondern in dem zweiten Bereich 16 angeordnet. Die Drehmomentübertragung findet somit im Bereich des Endes des Kopfs 2 statt, das in Richtung des freien Endes 5 des Schafts 3 weist.

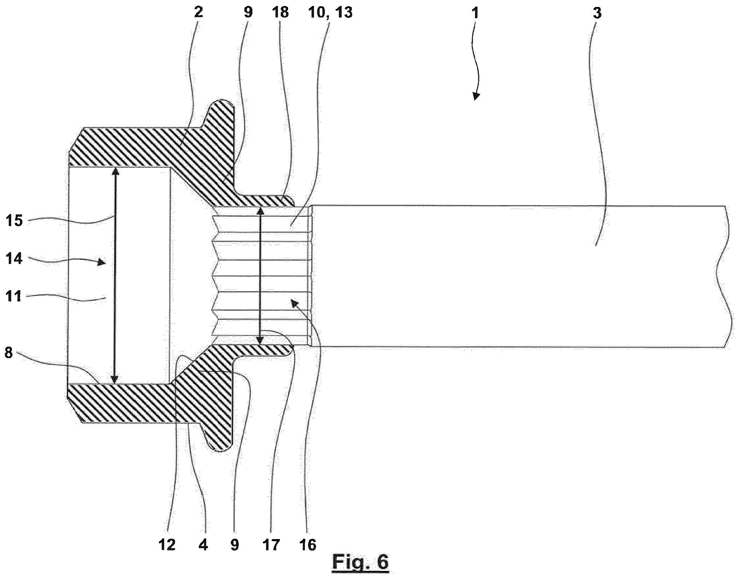

Eine dritte beispielhafte Ausführungsform der Schraube 1 ist in **Fig. 6** dargestellt. Dort ist erkennbar, dass der Kopf 2 auch einen axial länger ausgebildeten Bund 18 aufweisen kann. Die Drehmomentübertragung findet in diesem Fall größtenteils im Bereich des Bunds 18 des Kopfs 2 statt.

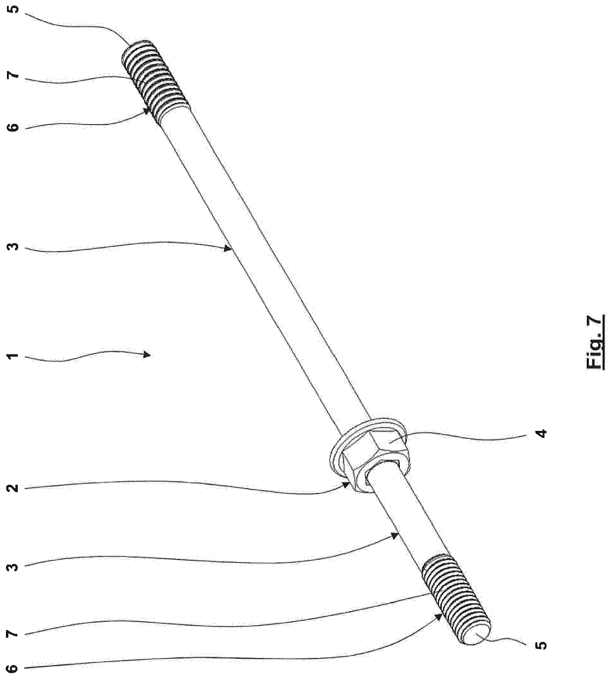

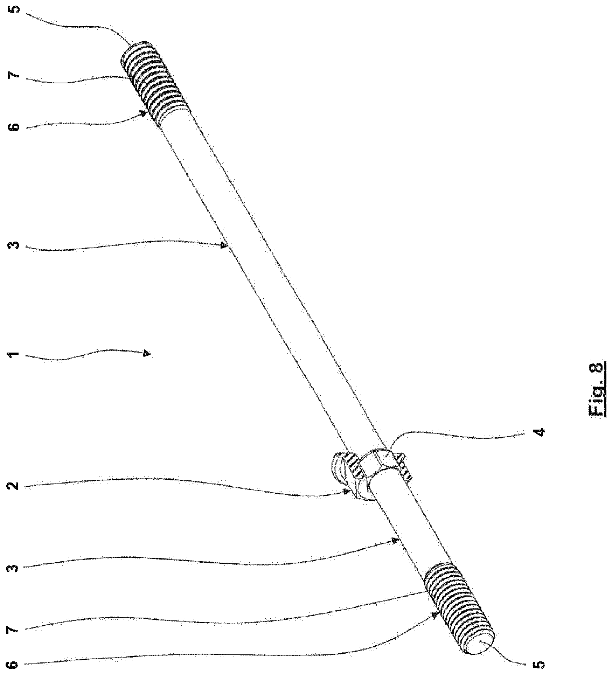

**Fig. 7** **und** **8** zeigen Ansichten einer weiteren beispielhaften Ausführungsform der Schraube 1. In diesem Fall handelt es sich um eine Schraube 1 mit zwei Gewindeabschnitten 6. Der Kopf 2 ist zwischen diesen beiden Gewindeabschnitten 6 angeordnet. Ansonsten sind hier die Koppelausnehmung 8 und das Koppelelement 11 in der gleichen Weise wie bei der ersten oberhalb beschriebenen Ausführungsform der Schraube 1 ausgebildet.

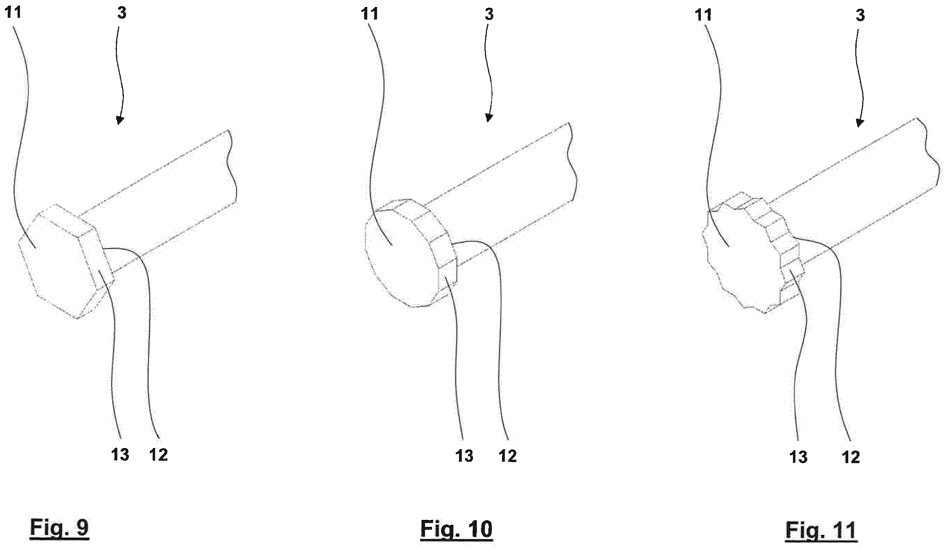

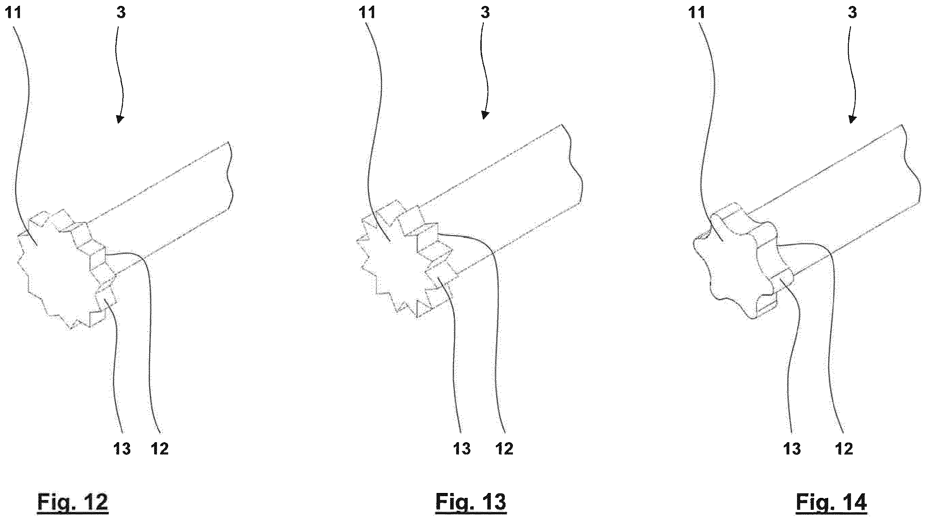

**Fig. 9-14** zeigen verschiedene Beispiele für die Ausbildung des Koppelelements 11 des Schafts 3. In Fig. 9 ist das Drehmomentübertragungsgegenelement 13 als Sechskant ausgebildet. In Fig. 10 ist das Drehmomentübertragungsgegenelement 13 als sonstige Gestaltung mit zwölf Funktionsflächen ausgebildet. In Fig. 11 ist das Drehmomentübertragungsgegenelement 13 als Zwölfkant ausgebildet. In Fig. 12 ist das Drehmomentübertragungsgegenelement 13 als Zwölfzahn ausgebildet. In Fig. 13 ist das Drehmomentübertragungsgegenelement 13 als Zwölfstern ausgebildet. In Fig. 14 ist das Drehmomentübertragungsgegenelement 13 als Sechsrund ausgebildet.

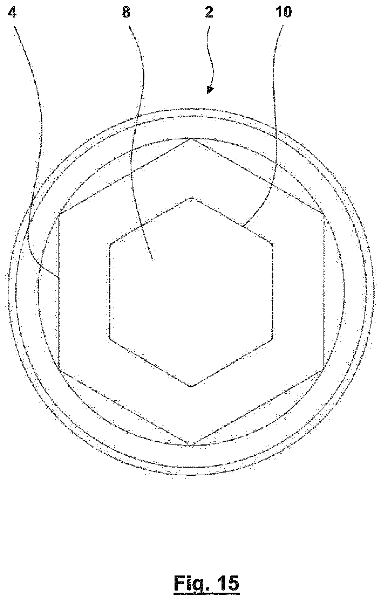

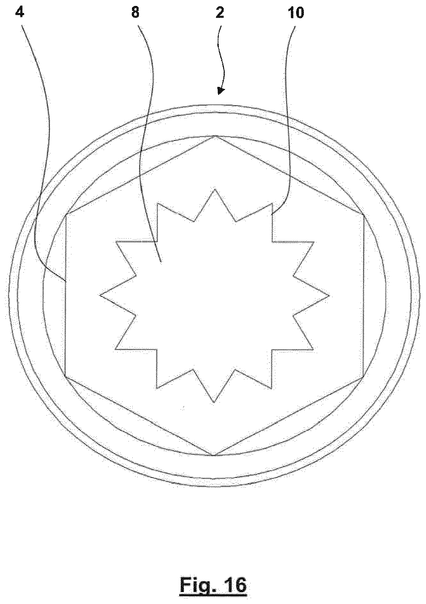

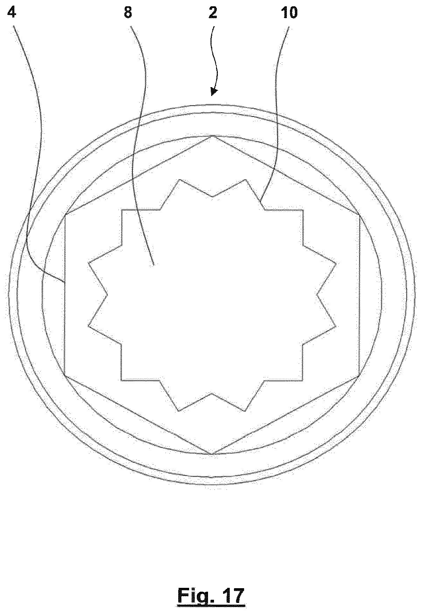

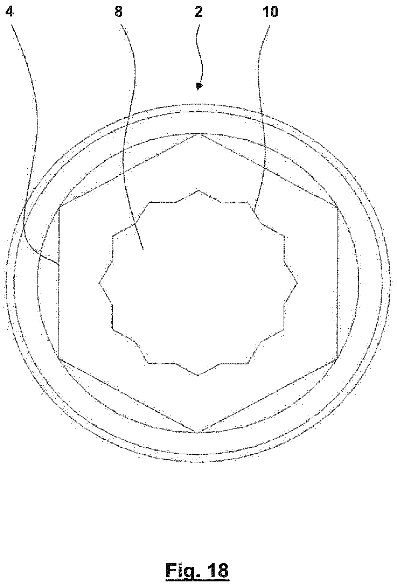

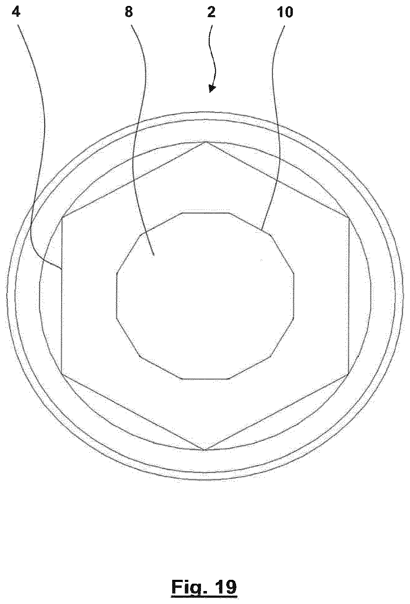

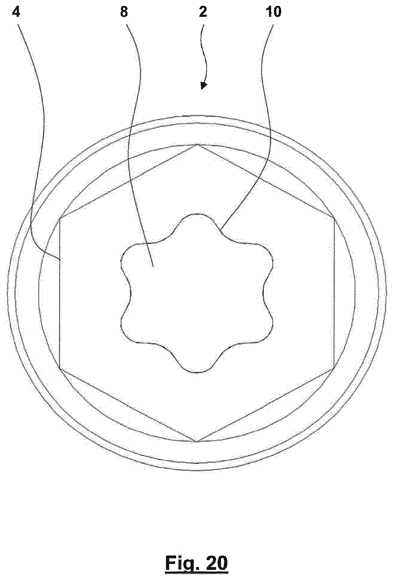

**Fig. 15-20** zeigen verschiedene Ausführungsformen des Kopfs 2 der Schraube 1. In Fig. 15 ist das Drehmomentübertragungselement 10 der Koppelausnehmung 8 des Kopfs 2 als Sechskant ausgebildet. In Fig. 16 handelt es sich um einen Zwölfstern. In Fig. 17 handelt es sich um einen Zwölfzahn. In Fig. 18 handelt es sich um einen Zwölfkant. In Fig. 19 handelt es sich um eine sonstige Gestaltung mit zwölf Funktionsflächen. In Fig. 20 handelt es sich um einen Sechsrund.

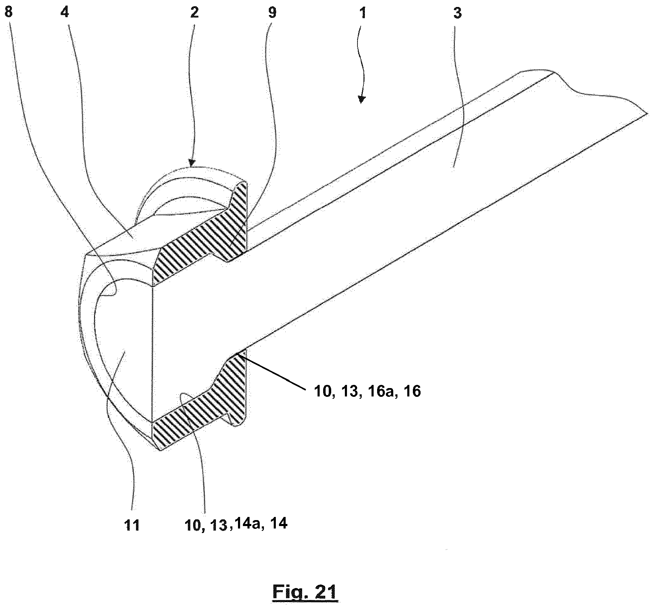

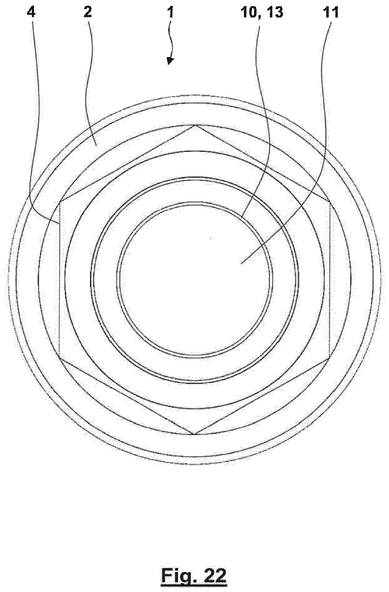

In **Fig. 21** **und** **22** ist eine beispielhafte Ausführungsform der neuen Schraube 1 gezeigt, bei der die Drehmomentübertragung nicht durch einen Formschluss, sondern einen Kraftschluss realisiert ist. Das Koppelelement 11 weist also gegenüber der Koppelausnehmung 8 ein gewisses Übermaß auf und wird im Sinne der Erreichung einer Übermaßpassung in die Koppelausnehmung 8 eingebracht. Diese Presspassung ist dabei in den dargestellten Beispiel sowohl zwischen dem ersten Bereich 14 und dem ersten Abschnitt 14a vorhanden als auch zwischen dem zweiten Bereich 16 und dem zweiten Abschnitt 16a, so dass das Drehmomentübertragungselement 10 als auch das Drehmomentübertragungsgegenelement 13 jeweils durch die Flächen, welche an diesen bzw. dieser Presspassung(en) teilnehmen, ausgebildet wird bzw. die dem entsprechenden Flächen ausbildet.

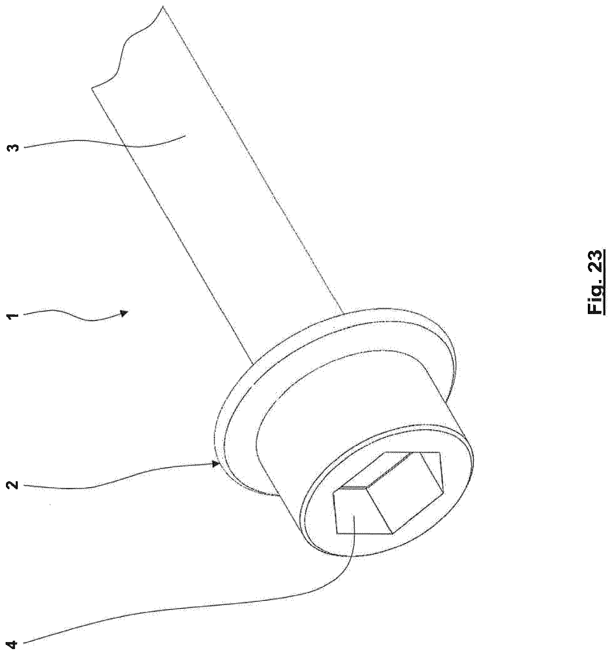

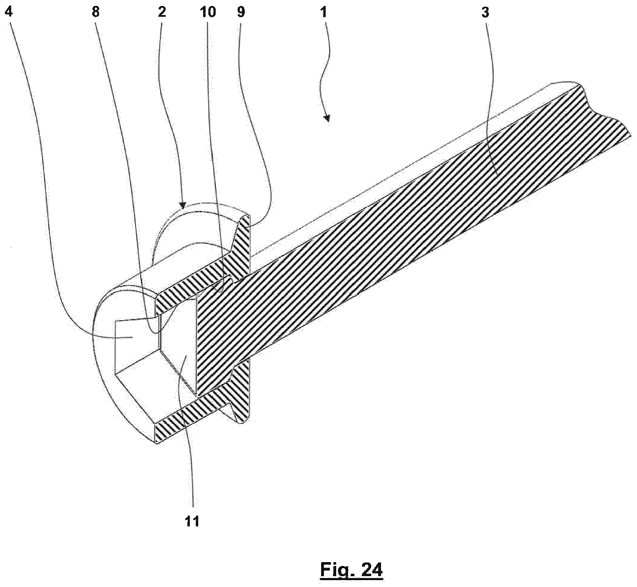

**Fig. 23** **und** **24** zeigen eine weitere beispielhafte Ausführungsform der neuen Schraube 1. In diesem Fall ist die Werkzeugangriff-Kontur 4 der Schraube 1 als Werkzeugangriff-Innenkontur ausgebildet.

**Fig. 25-29** zeigen verschiedene Ansichten einer weiteren beispielhaften Ausführungsform der Schraube 1 bzw. des Kopfs 2 und des Schafts 3. In diesem Fall sind das Drehmomentübertragungselement 10 und das Drehmomentübertragungsgegenelement 13 jeweils in Umfangsrichtung asymmetrisch ausgebildet. Die Asymmetrie ist dabei so gewählt, dass das Drehmoment im Anzugsdrehrichtungssinn des Gewindes 7 sicher übertragen wird, während eine solche Drehmomentübertragung aufgrund der Schrägen des Drehmomentübertragungselements 10 im Löserichtungssinn des Gewindes 7 nicht übertragen wird.

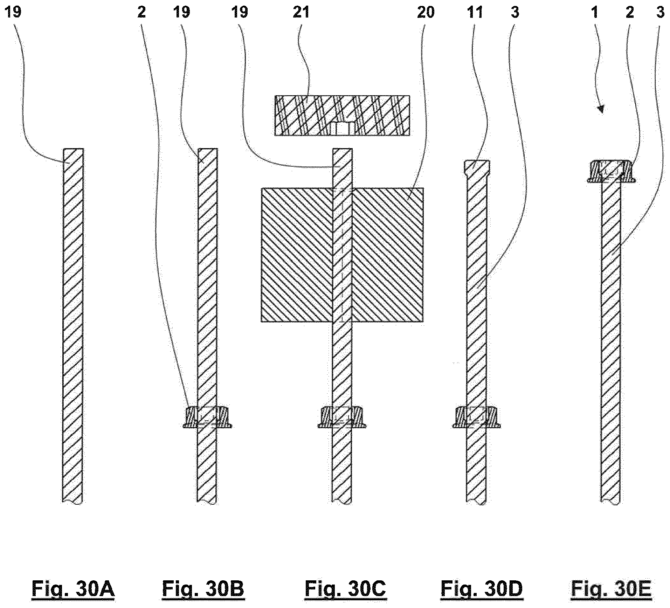

**Fig. 30A-30E** zeigen in einer vereinfachten Darstellung ein beispielhaftes Umformverfahren zum maschinellen Herstellen einer oberhalb beschriebenen hochfesten Schraube 1. In Fig. 30A ist ein Schaftrohling 19 dargestellt. In Fig. 30B wird auf diesen Schaftrohling 19 ein Kopf 2 mittels seiner Koppelausnehmung 8 aufgefädelt. Dieser Kopf 2 wurde zuvor aus einem Kopfrohling in einem Umformwerkzeug hergestellt. Der Kopf 2 könnte aber auch erst in einem späteren Verfahrens- schritt auf den Schaftrohling 19 oder den Schaft 3 aufgefädelt werden. In Fig. 30C wird der Schaftrohling 19 mittels Klemmbacken 20 festgehalten und mittels eines translatorisch bewegten Stempels 21 in einem Teil so umgeformt, dass das Koppelement 11 entsteht. Dies ist dann in Fig. 30Ddargestellt. Aus dem Schaftrohling 19 wurde somit der Schaft 3. In Fig. 30E ist nun noch die nach dem Zusammenfügen von Kopf 2 und Schaft 3 durch translatorisches Verschieben des Kopfs 2 in dem Bereich des Koppelelements dargestellt.

### Bezugszeichenliste:

- 1: Schraube
- 2: Kopf
- 3: Schaft
- 4: Werkzeugangriff-Kontur
- 5: freies Ende
- 6: Gewindeabschnitt
- 7: Gewinde
- 8: Koppelausnehmung
- 9: Axialkraftübertragungselement / Stufenbereich
- 10: Drehmomentübertragungselement
- 11: Koppelelement
- 12: Axialkraftübertragungsgegenelement / Zwischenabschnitt
- 13: Drehmomentübertragungsgegenelement
- 14: erster Bereich
- 14a: erster Abschnitt
- 15: ersten Innendurchmesser
- 16: zweiter Bereich
- 16a: zweiter Abschnitt
- 17: zweiter Innendurchmesser
- 18: Bund
- 19: Schaftrohling
- 20: Klemmbacken
- 21: Stempel

## Patentansprüche

1. Hochfeste Schraube (1), mit
einem Kopf (2) mit einer Werkzeugangriff-Kontur (4),
einem Schaft (3) mit einem vom Kopf (2) wegweisenden freien Ende (5), wobei ein Gewindeabschnitt (6) mit einem Gewinde (7) an dem Schaft (3) angeordnet ist, wobei das Gewinde (7) als metrisches ISO-Gewinde oder Zollgewinde ausgebildet ist,
wobei der Kopf (2) und der Schaft (3) als stofflich getrennte Teile ausgebildet sind,
wobei der Kopf (2) eine radial innen angeordnete Koppelausnehmung (8) mit einem Axialkraftübertragungselement (9) und einem Drehmomentübertragungselement (10) aufweist,
wobei der Schaft (3) ein radial außen an seinem Außenumfang angeordnetes Koppelelement (11) mit einem Axialkraftübertragungsgegenelement (12) und einem Drehmomentübertragungsgegenelement (13) aufweist,
wobei das Koppelelement (11) in die Koppelausnehmung (8) eingreift, wobei das Axialkraftübertragungselement (9) und das Axialkraftübertragungsgegenelement (12) derart formschlüssig ineinandergreifend ausgebildet und angeordnet sind, dass eine axiale translatorische Bewegung des Kopfs (2) relativ zum Schaft (3) in Richtung weg von dem freien Ende (5) des Schafts (3) verhindert wird bzw. verhindert ist, insbesondere unlösbar, und dadurch, dass das Drehmomentübertragungselement (10) und das Drehmomentübertragungsgegenelement (13) derart ineinandergreifend ausgebildet und angeordnet sind, dass eine rotatorische Bewegung des Kopfs (2) relativ zum Schaft (3) im Anzugsdrehrichtungssinn des Gewindes (7) reibschlüssig verhindert wird bzw. ist.

2. Hochfeste Schraube (1) nach Anspruch 1, wobei die Koppelausnehmung (8) gestuft ausgebildet ist und einen ersten Bereich (14) mit einem ersten Innendurchmesser (15) und einen zweiten Bereich (16) mit einem zweiten Innendurchmesser (17) aufweist, wobei erste Innendurchmesser (15) größer als der zweite Innendurchmesser (17) ist, und
wobei der zweite Bereich (16) näher zum freien Ende (5) des Schafts (3) als der erste Bereich (14) angeordnet ist.

3. Hochfeste Schraube (1) nach Anspruch 2, wobei der zweite Bereich (14) das Axialkraftübertragungselement (9) im Sinne eines axialen Anschlags bildet.

4. Hochfeste Schraube (1) nach Anspruch 3, wobei das Koppelelement (11) einen zu dem axialen Anschlag korrespondierenden axialen Gegenanschlag bildet, dessen Außendurchmesser größer als der Außendurchmesser des Schafts (3) und größer als der zweite Innendurchmesser (17) der Koppelausnehmung (8) ist.

5. Hochfeste Schraube (1) nach mindestens einem der vorhergehenden Ansprüche, wobei der erste Bereich (14) das Drehmomentübertragungselement (10) bildet.

6. Hochfeste Schraube (1) nach mindestens einem der vorhergehenden Ansprüche, wobei der zweite Bereich (16) das Drehmomentübertragungselement (10) bildet.

7. Hochfeste Schraube (1) nach mindestens einem der vorhergehenden Ansprüche, wobei das Drehmomentübertragungselement (10) und das Drehmomentübertragungsgegenelement (13) jeweils in Umfangsrichtung symmetrisch ausgebildet sind.

8. Hochfeste Schraube (1) nach mindestens einem der vorhergehenden Ansprüche, wobei das Drehmomentübertragungselement (10) und das Drehmomentübertragungsgegenelement (13) derart ausgebildet sind, dass sie das maximale Anzugsdrehmoment der Schraube (1) bestimmen und bei einer Überschreitung des maximalen Anzugsdrehmoments die rotatorische Bewegung des Kopfs (2) relativ zum Schaft (3) im Anzugsdrehrichtungssinn des Gewindes (7) nicht mehr verhindern.

9. Hochfeste Schraube (1) nach mindestens einem der vorhergehenden Ansprüche, wobei der Schaft (3) aus hochfestem Stahl oder einem Faserverbundwerkstoff besteht, und der Kopf (2) aus hochfestem Stahl oder einem Faserverbundwerkstoff besteht.

10. Umformverfahren zum maschinellen Herstellen einer hochfesten Schraube (1) nach mindestens einem der vorhergehenden Ansprüche, aus einem Kopfrohling und einem Schaftrohling (19), mit den Schritten:
- Umformen des Kopfrohlings derart in einem Umformwerkzeug, dass ein Kopf (2) einer Schraube (1) mit einer radial innen angeordneten Koppelausnehmung (8) mit einem Axialkraftübertragungselement (9) und einem Drehmomentübertragungselement (10) erzeugt wird,
- Auffädeln des Kopfs (2) mittels der Koppelausnehmung (8) auf einen Schaftrohling (19),
- Umformen eines Teils des Schaftrohlings (19) derart in einem Umformwerkzeug, dass ein Schaft (3) mit einem radial außen an seinem Außenumfang angeordneten Koppelelement (11) mit einem Axialkraftübertragungsgegenelement (12) und einem Drehmomentübertragungsgegenelement (13) erzeugt wird, und
- Zusammenfügen von Kopf (2) und Schaft (3) durch translatorisches Verschieben des Kopfs (2) derart, dass das Koppelelement (11) in die Koppelausnehmung (8) eingreift.

11. Umformverfahren nach Anspruch 10, weiterhin **gekennzeichnet durch** die folgenden Schritte:
- vor dem Schritt des Auffädelns: Umformen des Kopfrohlings derart in einem Umformwerkzeug, dass eine Werkzeugangriff-Kontur (4) erzeugt wird, und/oder
nach dem Schritt des Zusammenfügens: Sichern des Kopfs (2) an dem Schaft (3) zur Verhinderung einer axialen translatorischen Bewegung des Kopfs (2) relativ zum Schaft (3) in Richtung des freien Endes (5) des Schafts (3), und/oder
wobei es sich bei dem Umformen jeweils um Kaltumformen handelt, und/oder
wobei das Umformen des Teils des Schaftrohlings (19) mittels eines translatorisch bewegten Stempels (21) erfolgt, und/oder
wobei der Schaftrohling (19) während des Umformens durch Klemmbacken (20) gehalten wird.

## Claims

1. A high-strength screw (1), with
a head (2) with a tool engagement contour (4),
a shank (3) with a free end (5) pointing away from the head (2),
wherein a threaded section (6) with a thread (7) is arranged on the shank (3),
wherein the thread (7) is formed as a metric ISO thread or inch thread,
wherein the head (2) and the shank (3) are formed as materially separate parts,
wherein the head (2) has a coupling recess (8) arranged radially inside with an axial force transmission element (9) and a torque transmission element (10),
wherein the shank (3) has a coupling element (11) arranged radially outside on its outer circumference with an axial force transmission counter element (12) and a torque transmission counter element (13),
wherein the coupling element (11) engages in the coupling recess (8),
wherein the axial force transmission element (9) and the axial force transmission counter element (12) are designed and arranged to positively interlock in such a way that an axial translatory movement of the head (2) relative to the shank (3) in the direction away from the free end (5) of the shank (3) is prevented or will be prevented, in particular non-releasably, and
in that the torque transmission element (10) and the torque transmission counter element (13) are designed and arranged to interlock in such a way that a rotational movement of the head (2) relative to the shank (3) in the tightening direction of the thread (7) is or will be frictionally prevented.

2. The high-strength screw (1) according to claim 1, wherein the coupling recess (8) is stepped and has a first portion (14) with a first inner diameter (15) and a second portion (16) with a second inner diameter (17), the first inner diameter (15) being larger than the second inner diameter (17), and wherein the second portion (16) is located closer to the free end (5) of the shank (3) than the first portion (14).

3. The high-strength screw (1) according to claim 2, wherein the second portion (14) forms the axial force transmission element (9) in the sense of an axial stop.

4. The high-strength screw (1) according to claim 3, wherein the coupling element (11) forms an axial counter stop corresponding to the axial stop, the outer diameter of which is greater than the outer diameter of the shank (3) and greater than the second inner diameter (17) of the coupling recess (8).

5. The high-strength screw (1) according to at least one of the preceding claims, wherein the first portion (14) forms the torque transmission element (10).

6. The high-strength screw (1) according to at least one of the preceding claims, wherein the second portion (16) forms the torque transmission element (10).

7. The high-strength screw (1) according to at least one of the preceding claims, wherein the torque transmission element (10) and the torque transmission counter element (13) are each formed symmetrically in the circumferential direction.

8. The high-strength screw (1) according to at least one of the preceding claims, wherein the torque transmission element (10) and the torque transmission counter element (13) are formed in such a way that they determine the maximum tightening torque of the screw (1) and, if the maximum tightening torque is exceeded, no longer prevent the rotational movement of the head (2) relative to the shank (3) in the tightening direction of the thread (7).

9. The high-strength screw (1) according to at least one of the preceding claims, wherein the shank (3) consists of high-strength steel or a fibre composite material, and the head (2) consists of high-strength steel or a fibre composite material.

10. A forming method for the mechanical production of a high-strength screw (1) according to at least one of the preceding claims, from a head blank and a shank blank (19), comprising the steps:
- forming the head blank in a forming tool in such a way that a head (2) of a screw (1) with a coupling recess (8) arranged radially inside with an axial force transmission element (9) and a torque transmission element (10) is produced,
- threading the head (2) by means of the coupling recess (8) onto a shank blank (19),
- forming a part of the shank blank (19) in a forming tool in such a way that a shank (3) with a coupling element (11) arranged radially outside on its outer circumference with an axial force transmission counter element (12) and a torque transmission counter element (13) is produced, and
- joining of head (2) and shank (3) by translatory displacement of the head (2) in such a way that the coupling element (11) engages in the coupling recess (8).

11. The forming method according to claim 10, further **characterized by** the following steps:
- before the threading step: forming the head blank in a forming tool in such a way that a tool engagement contour (4) is produced, and/or
after the joining step: securing the head (2) to the shank (3) to prevent axial translational movement of the head (2) relative to the shank (3) in the direction of the free end (5) of the shank (3), and/or
wherein the forming is in each case cold forming, and/or
wherein the forming of the part of the shank blank (19) takes place by means of a translatory moved punch (21), and/or
wherein the shank blank (19) is held by clamping jaws (20) during forming.

## Revendications

1. Vis à haute résistance (1), comprenant
une tête (2) ayant un contour d'engagement d'outil (4),
une tige (3) ayant une extrémité libre (5) dirigée en éloignement de la tête (2),
dans laquelle
un tronçon fileté (6) ayant un filetage (7) est disposé sur la tige (3), le filetage (7) étant réalisé sous forme de filetage métrique ISO ou de filetage au pouce,
la tête (2) et la tige (3) sont réalisées sous forme de parties séparées en termes de matière,
la tête (2) présente un évidement d'accouplement (8) disposé radialement à l'intérieur et comprenant un élément de transmission de force axiale (9) et un élément de transmission de couple (10),
la tige (3) présente un élément d'accouplement (11) disposé radialement à l'extérieur sur sa circonférence extérieure et comprenant un contre-élément de transmission de force axiale (12) et un contre-élément de transmission de couple (13),
l'élément d'accouplement (11) s'engage dans l'évidement d'accouplement (8),
l'élément de transmission de force axiale (9) et le contre-élément de transmission de force axiale (12) sont réalisés et disposés de manière à s'engager l'un dans l'autre par coopération de forme, en particulier de manière non libérable, de telle sorte qu'un mouvement de translation axiale de la tête (2) par rapport à la tige (3) dans la direction en éloignement de l'extrémité libre (5) de la tige (3) est ou sera empêché, et
l'élément de transmission de couple (10) et le contre-élément de transmission de couple (13) sont réalisés et disposés de manière à s'engager l'un dans l'autre de telle sorte qu'un mouvement de rotation de la tête (2) par rapport à la tige (3) dans le sens de rotation de serrage du filetage (7) est ou sera empêché par coopération de friction.

2. Vis à haute résistance (1) selon la revendication 1,
dans laquelle l'évidement d'accouplement (8) est réalisé en gradin et présente une première zone (14) ayant un premier diamètre intérieur (15) et une deuxième zone (16) ayant un deuxième diamètre intérieur (17), le premier diamètre intérieur (15) étant supérieur au deuxième diamètre intérieur (17), et
la deuxième zone (16) est disposée plus près de l'extrémité libre (5) de la tige (3) que la première zone (14).

3. Vis à haute résistance (1) selon la revendication 2,
dans laquelle la deuxième zone (14) constitue l'élément de transmission de force axiale (9) au sens d'une butée axiale.

4. Vis à haute résistance (1) selon la revendication 3,
dans laquelle l'élément d'accouplement (11) forme une contrebutée axiale correspondant à la butée axiale, dont le diamètre extérieur est supérieur au diamètre extérieur de la tige (3) et supérieur au deuxième diamètre intérieur (17) de l'évidement d'accouplement (8).

5. Vis à haute résistance (1) selon l'une au moins des revendications précédentes,
dans laquelle la première zone (14) constitue l'élément de transmission de couple (10).

6. Vis à haute résistance (1) selon l'une au moins des revendications précédentes,
dans laquelle la deuxième zone (16) constitue l'élément de transmission de couple (10).

7. Vis à haute résistance (1) selon l'une au moins des revendications précédentes,
dans laquelle l'élément de transmission de couple (10) et le contre-élément de transmission de couple (13) sont réalisés chacun à symétrie dans la direction circonférentielle.

8. Vis à haute résistance (1) selon l'une au moins des revendications précédentes,
dans laquelle l'élément de transmission de couple (10) et le contre-élément de transmission de couple (13) sont réalisés de manière à déterminer le couple de serrage maximal de la vis (1) et, en cas de dépassement du couple de serrage maximal, à ne plus empêcher le mouvement de rotation de la tête (2) par rapport à la tige (3) dans le sens de rotation de serrage du filetage (7).

9. Vis à haute résistance (1) selon l'une au moins des revendications précédentes,
dans laquelle la tige (3) est constituée en acier à haute résistance ou en un matériau composite à fibres, et la tête (2) est constituée en acier à haute résistance ou en un matériau composite à fibres.

10. Procédé de formage pour la fabrication mécanique d'une vis à haute résistance (1) selon l'une au moins des revendications précédentes, à partir d'une ébauche de tête et d'une ébauche de tige (19), comprenant les étapes consistant à :
- former l'ébauche de tête dans un outil de formage de manière à produire une tête (2) d'une vis (1) avec un évidement d'accouplement (8) disposé radialement à l'intérieur et ayant un élément de transmission de force axiale (9) et un élément de transmission de couple (10),
- enfiler la tête (2) sur une ébauche de tige (19) au moyen de l'évidement d'accouplement (8),
- former une partie de l'ébauche de tige (19) dans un outil de formage de manière à produire une tige (3) avec un élément d'accouplement (11) disposé radialement à l'extérieur sur sa circonférence extérieure et ayant un contre-élément de transmission de force axiale (12) et un contre-élément de transmission de couple (13), et
- assembler la tête (2) et la tige (3) par un déplacement en translation de la tête (2) de telle sorte que l'élément d'accouplement (11) s'engage dans l'évidement d'accouplement (8).

11. Procédé de formation selon la revendication 10,
**caractérisé en outre par** les étapes suivantes consistant à :
avant l'étape d'enfilage : former l'ébauche de tête dans un outil de formage de manière à produire un contour d'engagement d'outil (4), et/ou après l'étape d'assemblage : bloquer la tête (2) à la tige (3) pour empêcher un mouvement de translation axiale de la tête (2) par rapport à la tige (3) dans la direction de l'extrémité libre (5) de la tige (3), et/ou dans lequel le formage respectif est un formage à froid, et/ou le formage de la partie de l'ébauche de tige (19) est effectué au moyen d'un poinçon (21) déplacé en translation, et/ou
l'ébauche de tige (19) est retenue par des mâchoires de serrage (20) pendant le formage.
